# EUROPÄISCHE PATENTSCHRIFT

(11) **EP 1 416 298 B1**
(45) Veröffentlichungstag und Bekanntmachung des Hinweises auf die Patenterteilung: **02.10.2013**
(21) Anmeldenummer: 03024493.3
(22) Anmeldetag: 24.10.2003
(51) Int. Cl.: G01V 1/38, B63B 21/48

(54) **Endstück für eine Unterwasser-Schleppantenne**
Endpiece for underwater towed array
Embout pour antenne remorquée sous-marin

(30) Priorität: 30.10.2002 DE 10250559
(43) Veröffentlichungstag der Anmeldung: 06.05.2004
(73) Patentinhaber: ATLAS ELEKTRONIK GmbH, 28305 Bremen (DE)
(72) Erfinder: Bauer, Wilhelm, 27711 Osterholz-Scharmbeck (DE); Kristann, Andreas, 28307 Bremen (DE)
(74) Vertreter: Weidner Stern Jeschke

(56) Entgegenhaltungen:
- WO-A-87/04988
- WO-A-88/06117
- DE-A1- 19 720 991
- FR-A- 2 841 529
- GB-A- 2 149 916
- US-A- 728 330
- US-A- 3 134 355
- US-A- 4 509 151
- US-A- 4 534 306

## Beschreibung

Die Erfindung betrifft ein Endstück für eine nachschleppbare Unterwasser-Schleppantenne zur Erzeugung einer der Schlepprichtung entgegengerichteten Zugkraft am Schleppantennenende.

Unterwasser-Schleppantennen, wie sie z.B. aus der GB 21 49 916 A bekannt sind, setzen sich aus einem Schleppkabel, einem schlauchförmigen Schleppstrang, der die akustische Sektion der Schleppantenne bildet, und einem Endstück, einem sog. rope tail oder rope drogue, zusammen, das die Aufgabe hat, durch Erzeugung einer der Schlepprichtung entgegengerichteten Zugkraft, den Schleppstrang während der Schleppfahrt weitgehend gestreckt zu halten. Das Zugkabel ist an dem Schleppstrang befestigt und das Endstück ist endseitig frei. Zwischen dem Schleppkabel und dem Schleppstrang einerseits und dem Schleppstrang und dem Endstück andererseits sind im allgemeinen Schwingungsdämpfungsmodule, sog. VIM's, zur akustischen Entkopplung des Schleppstrangs von Zugkabel und Endstück angeordnet.

Ein bekanntes Endstück dieser Art (US 4 509 151 A) besteht aus einer Mehrzahl von Nylonfäden mit einer Länge von ca. 30m und einem Fadendurchmesser von ca. 15mm, von denen das eine Ende mittels einer drehenden Kupplung an dem hinteren VIM befestigt und das andere Ende frei ist. Ein solches Endstück kann für eine fest vorgegebene Schleppgeschwindigkeit so ausgelegt werden, daß es aufgrund seines Strömungswiderstandes im Wasser eine für die Streckung des akustisch sensitiven Teil der Schleppantenne ausreichenden Zugkraft am Schleppantennenende erzeugt. Bei niedrigerer Schleppgeschwindigkeit reicht dann allerdings die Zugkraft nicht aus, um die Schleppantenne gestreckt zu halten, und bei höherer Schleppgeschwindigkeit wird die Zugkraft, da der Strömungswiderstand des Endstücks mit dem Quadrat der Schleppgeschwindigkeit ansteigt, sehr groß, so daß schiffsseitig eine unerwünscht hohe Schleppkraft aufgebracht werden muß.

In der US 3,134,355 A wird ein schaufelförmiger See-Anker zum Befestigen von Wasserfahrzeugen offenbart, welcher eine Vorwärtsbewegung abbremst und sich einer Orientierung bei einer Kurvenfahrt anpasst. Weiterhin werden in der US 4,534,306 A Tandem-See-Anker offenbart, welche im Allgemeinen schirmförmig geformt sind und am Scheitelpunkt eine kleine Öffnung aufweisen.

Der Erfindung liegt die Aufgabe zugrunde, ein Endstück für eine Unterwasser-Schleppantenne zu schaffen, das auch bei niedrigen Schleppgeschwindigkeiten der Wasserströmung einen ausreichend hohen Strömungswiderstand entgegensetzt und damit eine für die Streckung des Schleppstrangs ausreichend hohe Zugkraft am Schleppantennenende erzeugt, die mit zunehmend höherer Schleppgeschwindigkeit nur maßvoll ansteigt.

Die Aufgabe ist erfindungsgemäß durch die Merkmale im Anspruch 1 gelöst.

Das erfindungsgemäße Endstück für eine Unterwasser-Schleppantenne hat den Vorteil, daß die Formkörper durch ihre Formgestaltung und Anzahl bereits bei niedriger Schleppgeschwindigkeit für einen ausreichend hohen Strömungswiderstand des Endstücks und damit für eine ausreichend hohe Zugkraft zur Streckung der Schleppantenne sorgen. Die erfindungsgemäße Trichterbauform des Formstücks mit dahinterliegender Endscheibe sorgt in der freien Strömung bei geringer Schleppgeschwindigkeit für einen ausreichend hohen Strömungswiderstand und damit für eine zur Streckung des Schleppstrangs genügend hohe Zugkraft bei nicht zu großer Anzahl von Formkörpern auf dem Seil, so daß eine akzeptable Länge des Endstücks realisiert werden kann. Die Zugkraft steigt bis zu einer vorgegebenen Schleppgeschwindigkeit an, da der Strömungswiderstand quadratisch mit der Schleppgeschwindigkeit anwächst. Durch die erfindungsgemäße Bemessung der Abstände zwischen den Formkörpern liegen aber oberhalb der vorgegebenen Schleppgeschwindigkeit die Formstücke im Strömungsschatten oder sog. Totwasser des jeweils in Schlepprichtung vorhergehenden Formkörpers, so daß die Gesetzmäßigkeit des quadratischen Anstiegs des Strömungswiderstands mit der Schleppgeschwindigkeit aufgehoben ist und die am Schleppantennenende erzeugte Zugkraft wesentlich geringer mit der Schleppgeschwindigkeit anwächst.

Darüber hinaus läßt sich das Endstück in vorteilhafter Weise als Auszugshilfe zur Erzeugung einer am Ausbringende der Schleppantenne angreifenden Zugkraft beim Fieren der Schleppantenne verwenden, wenn die Formkörper in einem Spülrohr mit einer Ein- und Austrittsöffnung für die schlauchförmige Schleppantenne gleitend geführt sind und von der Eintrittsöffnung her ein Wasserdruck in dem Spülrohr aufgebaut wird. Die Formkörper wirken in diesem Anwendungsfall wie Kolben, die von dem Wasserdruck durch das Spülrohr hindurchgeschoben werden und dabei über das am Schleppantennenende befestigte Seil eine Zugkraft auf den schlauchförmigen Schleppstrang aufbringen. Die Formkörper sind aus Teflon hergestellt, so daß sie eine hohe Gleitfähigkeit mit geringem Reibungswiderstand im Spülrohr aufweisen.

Durch die getroffenen konstruktiven Maßnahmen weist insgesamt das Endstück in Hinblick auf die akustische Sektion der Schleppantenne eine hohe akustische Verträglichkeit auf, so daß die akustische Eigenschaften der Schleppantenne nicht beeinträchtigt werden.

Zweckmäßige Ausführungsformen des erfindungsgemäßen Endstücks mit vorteilhaften Weiterbildungen und Ausgestaltungen der Erfindung ergeben sich aus den weiteren Ansprüchen.

Gemäß einer vorteilhaften Ausführungsform der Erfindung sind die Abstände zwischen den auf dem Seil festgelegten Formkörpern innerhalb des Strömungsschattenbereichs unterschiedlich festgelegt. Durch diese konstruktive Maßnahmen mit zufällig festgelegten Formkörperabständen, die aber alle der vorstehend beschriebenen Bedingung der Lage im Strömungsschatten genügen, werden Schwingungen des Endstücks während der Schleppfahrt stark gedämpft und beeinträchtigten nicht die akustischen Empfangseigenschaften des den akustischen Teil der Schleppantenne bildenden Schleppstrangs.

Gemäß einer vorteilhaften Ausführungsform der Erfindung sind die Formkörper um das Seil drehbar angeordnet. Durch das Rotationsvermögen der Formstücke auf dem Seil dreht sich das Endstück nicht um seine Längsachse, so daß Torsionsmomente am Schleppstrang vermieden werden. Anders als bei dem eingangs beschriebenen bekannten Endstück ist daher eine Kupplung zwischen Endstück und Schleppstrang bzw. VIM, die eine Rotation des Endstücks erlaubt, nicht erforderlich.

Gemäß einer vorteilhaften Ausführungsform der Erfindung ist der Außendurchmesser der Endscheibe gleich dem Außendurchmesser des Trichters an der Trichteröffnung bemessen und der Trichtermantel mit in Umfangsrichtung gegeneinander versetzten Axialstegen versehen, die sich von der Trichteröffnung bis zur Endscheibe erstrecken und deren parallel zur Trichterachse verlaufenden, äußeren Steglinien einen dem Außenradius der Endscheibe entsprechenden radialen Abstand von der Trichterachse haben. Auf die Trichteröffnung ist ein mit axialen Durchtrittsöffnungen versehener Abschlußkegel aufgesetzt, und im Abschlußkegel, am Trichtergrund und in der Endscheibe ist jeweils ein zentrales Durchtrittsloch für das Seil angeordnet, dessen Lochdurchmesser größer ist als der Außendurchmesser des Seils. Die Kegelform des Abschlußkegels, die Radien an den Außenkanten und die Axialstege sorgen dafür, daß beim Einsetzen des Endstückes als Auszugshilfe zum Fieren der Schleppantenne sich die Formstücke im Spülrohr der Ausbringvorrichtung für die Schleppantenne selbst zentrieren und nicht im Spülrohr hängen bleiben. Durch die gewählte Länge der Formstücke ist ein Verkanten im Spülrohr ausgeschlossen. Der Abschlußkegel stelle darüber hinaus sicher, daß beim Wiedereinholen der Schleppantenne die Formstücke problemlos durch die Austrittsöffnung des Spülrohrs hindurch eingezogen werden können und ein sicheres "Einfädeln" des Endstücks in das Spülrohr gewährleistet ist.

Gemäß einer vorteilhaften Ausführungsform der Erfindung weist der in Schlepprichtung letzter Formkörper einen Anschlag in Form eines vorzugsweise kegelstumpfförmigen Verschlußglieds auf, das zum Verschließen der Austrittsöffnung des Spülrohrs ausgebildet ist. Dieses Verschlußglied kann mit der Endscheibe einstückig ausgeführt werden. Nach dem Einfädeln des Endstücks in das Spülrohr beim Wiedereinholen der Schleppantenne legt sich das Verschlußglied an die Austrittsöffnung des Spülrohrs an und verhindert ein weiteres Einziehen des Endstücks sowie das Eindringen von Fremdkörpern in das Spülrohr. Gleichzeitig kann dadurch das Ende des Wiedereinholvorgangs sensiert und die Einholwinde für die Schleppantenne abgeschaltet werden.

Die Erfindung ist anhand eines in der Zeichnung dargestellten Ausführungsbeispiels im folgenden näher beschrieben. Es zeigen:
- Fig. 1: ausschnittweise eine Seitenansicht eines Endstücks für eine Unterwasser-Schleppantenne,
- Fig. 2: eine Seitenansicht des Trichterteils eines sich aus Trichterteil und Abschlußkegel zusammensetzenden Formkörpers im Endstück gemäß Fig. 1,
- Fig. 3: eine Unteransicht des Trichterteils in Richtung Pfeil III in Fig. 2,
- Fig. 4: einen Schnitt längs der Linie IV - IV in Fig. 2,
- Fig. 5: einen Schnitt längs der Linie V - V in Fig. 3,
- Fig. 6: eine perspektivische Darstellung des Trichterteils,
- Fig. 7: eine Draufsicht eines Abschlußkegels des Formkörpers im Endstück gemäß Fig. 1,
- Fig. 8: einen Schnitt längs der Linie VIII - VIII in Fig. 7,
- Fig. 9: ausschnittweise einen Längsschnitt eines Spülrohrs einer Ausbringvorrichtung für die Schleppantenne mit darin eingezogenem Endstück gemäß Fig. 1.

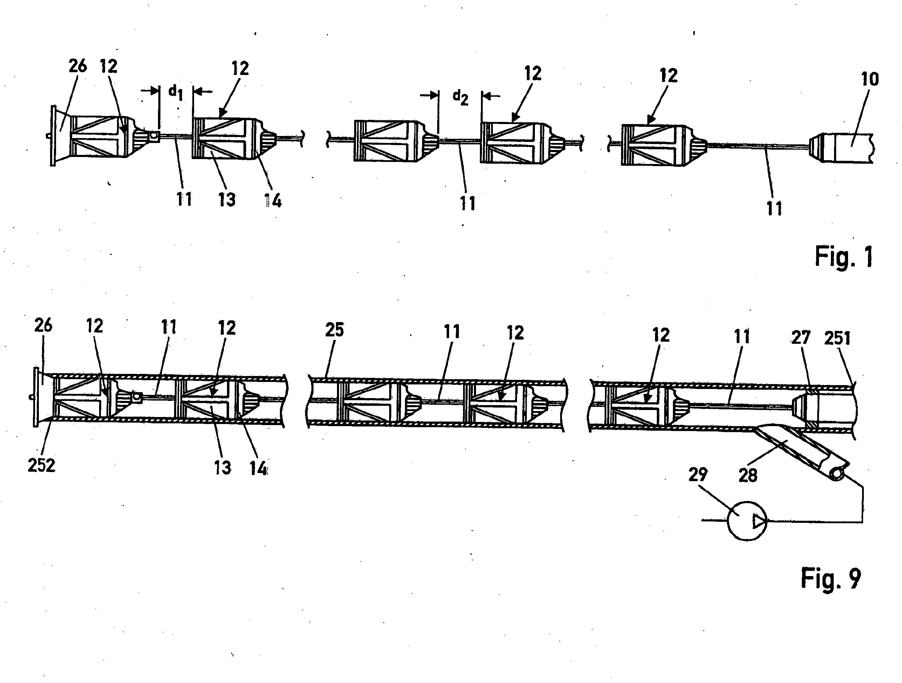

Das in Fig. 1 in Seitenansicht ausschnittweise dargestellte Endstück für eine nachschleppbare Unterwasser-Schleppantenne zur Erzeugung einer der Schlepprichtung entgegengerichteten Zugkraft am Schleppantennenende weist ein Seil 11 auf, auf dem eine Vielzahl von Formkörpern 12, die zur Erzeugung eines Strömungswiderstandes ausgebildet sind, angeordnet sind. Die Formkörper 12 sind voneinander beabstandet axial im wesentlichen unverschieblich auf dem Seil 11 festgelegt, können aber auf dem Seil 11 rotieren. Die Abstände d der Formkörper 12 voneinander sind so gewählt, daß bei Übersteigen einer festgelegten Schleppgeschwindigkeit jeder einem Formkörper 12 in Schlepprichtung nachgeordnete Formkörper 12 im Bereich des vom vorausliegenden Formkörpers 12 erzeugten Strömungsschattens oder "Totwassers" liegt. Dabei sind die Abstände d der Formkörper 12 innerhalb dieser auf den Strömungsschattenbereich festgelegten Abstandsbemessung unterschiedlich festgelegt, wie ein Vergleich der beiden in Fig. 1 eingetragenen Abstände d₁ und d₂ zeigt. Die unterschiedlichen Abstände d sind dabei willkürlich und Zufallsgrößen.

Das Seil 11 ist an einem Schlauchglied 10 befestigt, das seinerseits mit dem Ende eines den akustisch sensitiven Teil der Schleppantenne bildenden, schlauchförmigen Schleppstrangs verbindbar ist, wobei vorzugsweise zwischen dem Ende des Schleppstrangs und dem Schlauchglied 10 noch ein den Schleppstrang gegenüber dem Endstück akustisch entkoppelndes Dämpfungsmodul, ein sog. VIM, angeordnet ist. Das Schlauchglied 10 weist eine elastische, mittels Formstücke ausgesteifte Schlauchhülle auf, die mit einer Flüssigkeit, z.B. Öl, oder einem Gel gefüllt ist.

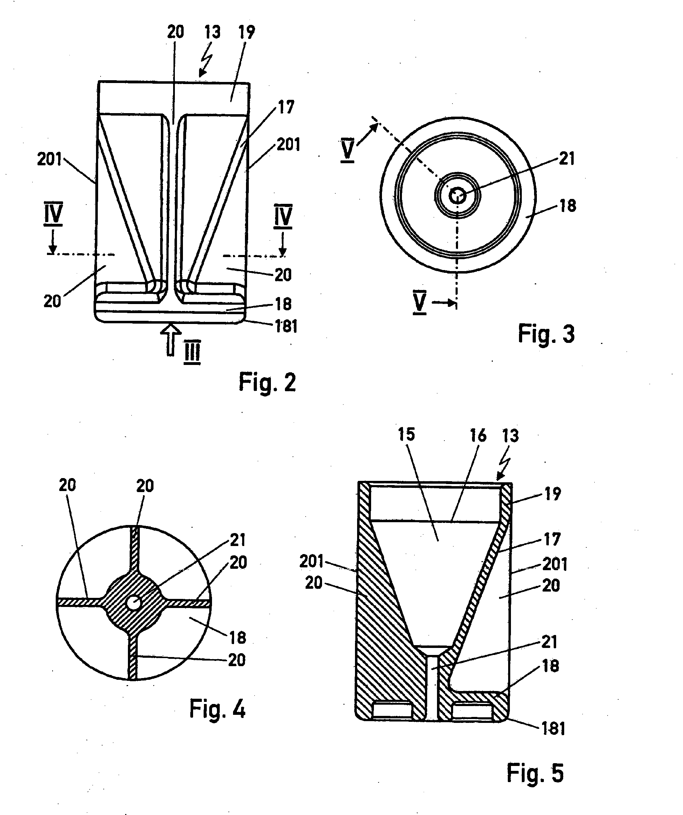

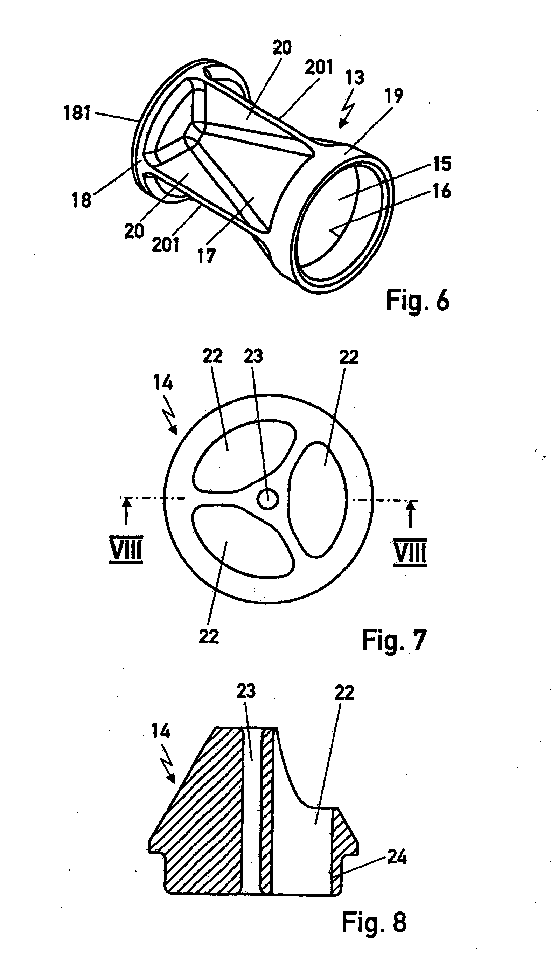

Alle Formkörper 12 sind identisch ausgebildet und bestehen aus zwei Teilen, einem Trichterteil 13 und einem mit dem Trichterteil 13 verbundenen Abschlußkegel 14. Trichterteil 13 und Abschlußkegel 14 sind aus Teflon hergestellt. Im Trichterteil 13 ist ein Trichter 15 mit in Schlepprichtung weisender Trichteröffnung 16 und eine an dem von der Trichteröffnung 16 abgekehrten Ende angeordnete, über die Außenkonturen des Trichtermantels 17 vorstehende Endscheibe 18 ausgebildet. Die Endscheibe 18 ist außen abgerundet. Die Rundungen des Außenmantels der Endscheibe 18 zu beiden Scheibenflächen hin sind in Fig. 1, 5 und 6 mit 181 gekennzeichnet. Der Trichteröffnung 16 ist ein zylindrischer Ringrand 19 vorgeordnet, dessen Innendurchmesser der Trichteröffnung 16 und dessen Außendurchmesser dem Außendurchmesser der Endscheibe 18 entspricht. Auf den Trichtermantel 17 sind vier in Umfangsrichtung um 90° Drehwinkel gegeneinander versetzte Axialstege 20 (Fig. 4) aufgesetzt, die sich von der Trichteröffnung 16, also von der Hinterkante des Ringrands 19 bis hin zu der zur Trichteröffnung 16 weisenden Vorderkante der Endscheibe 18, erstrecken (Fig. 2, 5 und 6). Die äußere Steglinie 201 der Axialstege 20 verläuft parallel zur Trichterachse bzw. zur Achse des Trichterteils 13 und weist einen radialen Abstand von der Trichterachse auf, die gleich dem Außenradius der Endscheibe 18 ist. In die Endscheibe 18 ist eine zentrale Duchgangsbohrung 21 eingebracht, die sich bis zum Trichtergrund des Trichters 15 erstreckt und im Trichter 15 frei mündet. Der Bohrungsdurchmesser ist größer gewählt als der Außendurchmesser des Seils 11.

Der auf die Trichteröffnung 16 aufsetzbare Abschlußkegel 14 weist drei um 120° Drehwinkel gegeneinander versetzte, axiale Durchtrittsöffnungen 22 sowie eine zentrale Durchgangsbohrung 23 auf, deren Bohrungsdurchmesser größer gewählt ist als der Außendurchmesser des Seils 11. Die Durchtrittsöffnungen 22 sind so groß gemacht, daß praktisch nur noch Stege zwischen ihnen verbleiben, die sternförmig angeordnet sind. Im Sternpunkt verläuft die Durchgangsbohrung 23. Der Außendurchmesser der Grundfläche des Abschlußkegels 14, die der Trichteröffnung 16 zugekehrt ist, ist gleich dem Außendurchmesser des Ringrands 19 am Trichterteil 13 bemessen, so daß Abschlußkegel 14 und Trichterteil 13 übergangslos zusammensetzbar sind. An dem der Trichteröffnung 16 zugekehrten Ende des Abschlußkegels 14 ist ein axial vorstehender Ringsteg 24 ausgebildet, der formschlüssig in den zylindrischen Ringrand 19 des Trichterteils 13 axial einschiebbar ist. Nach formschlüssigem Einsetzen des Ringsteg 24 in den Ringrand 19 werden Trichterteil 13 und Abschlußkegel 14 fest miteinander verbunden, z.B. durch mehrere Schraubverbindungen zwischen Ringrand 19 und Ringsteg 24. Die axiale Unverschiebbarkeit der Formkörper 12 auf dem Seil 11 wird z.B. durch hier nicht dargestellte Seilknoten bewirkt, die vorzugsweise im Innern des Trichters 15 liegen, so daß sich einmal der Trichtergrund und zum andern die Grundfläche des Abschlußkegels 14 an je einem Seilknoten abstützen.

Das beschriebene Endstück mit der Vielzahl der Formkörper 12 dient nicht nur zur Streckung des den akustischen Teils der Schleppantenne bildenden Schleppstrangs, sondern wird gleichzeitig auch als Auszugshilfe zur Erzeugung einer am Ausbringende der Schleppantenne angreifenden Zugkraft beim Fieren der Schleppantenne herangezogen. Hierzu ist bei aufgetrommelter Schleppantenne, die üblicherweise auf einer Trommel einer Seilwinde aufgewickelt ist, das Endstück vollständig in ein Spülrohr 25 einer Ausbringvorrichtung für die Schleppantenne eingezogen. Der lichte Durchmesser des Spülrohrs 25 ist wenig größer bemessen als der Außendurchmesser der Formkörper 12, also der Außendurchmesser von Endscheibe 18, Axialstege 20, Ringrand 19 und Grundfläche des Abschlußkegels 14. Durch das gewählte Material (Teflon) können die Formkörper 12 mit nur geringen Reibungsverlusten an der Rohrinnenwand des Spülrohrs 25 gleiten. Das Spülrohr 25 hat eine Eintrittsöffnung 251 und eine Austrittsöffnung 252 für das Schlauchglied 10 und die daran befestigte schlauchförmige Schleppantenne. Der Ringspalt zwischen der Schlauchhülle des Schlauchglieds 10 bzw. der Schlauchhülle der später einlaufenden Schleppantenne einerseits und der Innenwand des Spülrohrs 25 andererseits ist durch eine Dichtung 27 weitgehend flüssigkeitsdicht abgedichtet. Nahe der vorzugsweise als Labyrinthdichtung ausgeführten Dichtung 27 ist ein Wassereinlaß 28 angeordnet, der an einer Wasserpumpe 29 angeschlossen ist.

An dem in Schlepprichtung letzten Formkörper 12 des Endstücks ist ein kegelstumpfförmiges Verschlußglied 26 angeordnet, das als Anschlag dient und zum Verschließen der Austrittsöffnung 252 des Spülrohrs 25 ausgebildet ist. Das Verschlußglied 26 ist am Seil 11 oder am letzten Formkörper 12 und zwar an dessen Endscheibe 18, befestigt, kann aber auch mit der Endscheibe 18 des letzten Formkörpers 12 einstückig ausgeführt werden. Bei in das Spülrohr 25 eingezogenem Endstück legt sich das Verschlußglied 26 auf die Austrittsöffnung 252 des Spülrohrs 25 von außen her auf und verhindert ein weitergehendes Einziehen des Endstücks in das Spülrohr 25. Zugleich wird das Spülrohr 25 gegen Eindringen von Fremdkörpern abgeschlossen.

Wird zum Ausbringen der Schleppantenne die Aufwickeltrommel in Axialrichtung angetrieben, so wird zuvor mittels der Wasserpumpe 29 nahe der Eintrittsöffnung 251 ein Wasserdruck von z.B. 2 bis 3 bar im Spülrohr 25 aufgebaut. Da der Außendurchmesser der Formkörper 12 nur geringfügig kleiner ist als der lichte Durchmesser des Spülrohrs 25 wirken die Formkörper 12 als Kolben, so daß durch den'Wasserdruck eine zur Austrittsöffnung 252 hin gerichtete Zugkraft am Seil 11 erzeugt wird, die die Schleppantenne durch das Spülrohr 25 hindurch nach außen zum Austritt ins Wasser zieht. Die Kegelform der Abschlußkegel 14 und die Axialstege 20 am Trichterteil 13 sorgen dafür, daß die Formstücke 12 sich selbst zentrieren und nicht an toleranzbedingten Absätzen im Spülrohr 25 hängen bleiben. Durch die Länge des Trichterteils 13, die wesentlich größer ist als der Außendurchmesser des Trichterteils 13, z.B. doppelt so groß, ist ein Verkanten der Formkörper 12 im Spülrohr 25 ausgeschlossen.

Ist das Endstück durch den im Spülrohr 25 erzeugten Wasserdruck aus dem Spülrohr 25 ausgeschoben, so erzeugt das Endstück im freien Wasser bei fahrendem Schiff durch die Strömungswiderstände der Formkörper 12 weiterhin eine Zugkraft an der Schleppantenne, so daß diese weiterhin endseitig aus dem Spülrohr 25 ausgezogen wird, bis die Schleppantenne in ihrer gesamten Länge gefiert ist.

## Patentansprüche

1. Endstück für eine nachschleppbare Unterwasser-Schleppantenne zur Erzeugung einer der Schlepprichtung entgegengerichteten Zugkraft am Schleppantennenende, mit einer Vielzahl von auf einem Seil (11) im Abstand voneinander, axial im wesentlichen unverschieblich angeordneten Formkörpern (12), die zur Erzeugung eines Strömungswiderstandes ausgebildet sind, **dadurch gekennzeichnet, daß** jeder Formkörper (12) einen Trichter (15) mit in Schlepprichtung weisender Trichteröffnung (16), sowie eine an dem von der Trichteröffnung (16) abgekehrten Ende angeordnete, über den Trichtermantel (17) radial vorstehende Endscheibe (18) aufweist und dadurch, daß die Abstände (d) der Formkörper (12) so bemessen sind, daß bei Übersteigen einer festgelegten Schleppgeschwindigkeit jeder einem Formkörper (12) in Schlepprichtung nachgeordnete Formkörper (12) im Bereich des vom vorausliegenden Formkörper (12) erzeugten Strömungsschattens liegt.

2. Endstück nach Anspruch 1, **dadurch gekennzeichnet, daß** die Abstände (d) der Formkörper (12) unterschiedlich bemessen sind.

3. Endstück nach Anspruch 1 oder 2, **dadurch gekennzeichnet, daß** die Formkörper (12) um das Seil (11) drehbar angeordnet sind.

4. Endstück nach Anspruch 1, **dadurch gekennzeichnet, daß** der Mantel der Endscheibe (18) zu beiden Scheibenflächen hin abgerundet ist.

5. Endstück nach Anspruch 1 oder 4, **dadurch gekennzeichnet, daß** der Außendurchmesser der Endscheibe (18) gleich dem Außendurchmesser des Trichters (15) an der Trichteröffnung (16) ist.

6. Endstück nach einem der Ansprüche 1 oder 4 - 5, **dadurch gekennzeichnet, daß** auf dem Trichtermantel (17) in Umfangsrichtung gegeneinander versetzte Axialstege (20) aufgesetzt sind, die sich von der Trichteröffnung (16) bis zur Endscheibe (18) erstrecken und deren parallel zur Trichterachse verlaufende, äußere Steglinien (201) einen den Außenradius der Endscheibe (18) entsprechenden Radialabstand von der Trichterachse haben.

7. Endstück nach Anspruch 6, **dadurch gekennzeichnet, daß** der Drehwinkelversatz der Axialstege 90° beträgt.

8. Endstück nach einem der Ansprüche 1 oder 4 - 7, **dadurch gekennzeichnet, daß** auf die Trichteröffnung (16) ein axiale Druchtrittsöffnungen (22) aufweisender Abschlußkegel (14) aufgesetzt ist und daß im Abschlußkegel (14), im Trichtergrund und in der Endscheibe (18) jeweils eine zentrale Durchgangsbohrung (23, 21) vorgesehen ist, deren Bohrungsdruchmesser größer ist als der Außendurchmesser des Seils (11).

9. Endstück nach Anspruch 8, **dadurch gekennzeichnet, daß** der Trichteröffnung (16) ein Ringrand (19) mit einem den Durchmesser der Trichteröffnung (16) entsprechenden Innendurchmesser vorgeordnet ist und daß an dem trichterseitigen Ende des Abschlußkegels (14) ein Ringsteg (24) axial vorsteht, der formschlüssig in den Ringrand (19) einschiebbar ist.

10. Endstück nach Anspruch 9, **dadurch gekennzeichnet, daß** der Durchmesser der Grundfläche des Abschlußkegels (14) gleich dem Außendurchmesser des Ringrands (19) bemessen ist.

11. Endstück nach einem der Anprüche 1 - 10, **gekennzeichnet dadurch, dass** das Endstück derart ausgestaltet ist, dass es als Auszugshilfe zur Erzeugung einer am Ausbringende der Schleppantenne angreifenden Zugkraft beim Fieren der Schleppantenne verwendbar ist, wobei die Formkörper (12) in einem Spülrohr (25) mit einer ein- und Austrittsöffnung (251, 252) für die schlauchförmige Schleppantenne gleitend geführt sind und von der Eintrittsöffnung (251) des Spülrohrs (25) ein Wasserdruck im Spülrohr (25) aufgebaut wird.

12. Endstück nach Anspruch 11, **dadurch gekennzeichnet, daß** die Formkörper (12) aus gut gleitfähigem Material, vorzugsweise Teflon, bestehen.

13. Endstück nach Anspruch 11 oder 12, **dadurch gekennzeichnet, daß** der in Schlepprichtung letzte Formkörper (12) einen mit dem Spülrohr (25) zusammenwirkenden Anschlag aufweist.

14. Endstück nach Anspruch 13, **dadurch gekennzeichnet, daß** der Anschlag von einem vorzugsweise kegelstumpfförmigen Verschlußglied (26) gebildet ist, das zum Verschließen der Austrittsöffnung (252) des Spülrohrs (25) ausgebildet ist.

15. Endstück nach Anspruch 13, **dadurch gekennzeichnet, daß** das Verschlußglied (26) an der Endscheibe (18) des Formkörpers (12) befestigt ist.

## Claims

1. End piece for a towable underwater trailing antenna for generating a tensile force opposed to the towing direction at the end of the trailing antenna, with a plurality of moulded bodies (12) arranged substantially immovably axially at a distance from one another on a cable (11), which bodies are formed to generate a flow resistance, **characterised by** that each moulded body (12) has a funnel (15) with a funnel opening (16) pointing in the towing direction as well as an end disc (18) arranged at the end facing away from the funnel opening (16) and protruding radially beyond the funnel sheath (17), and by that the spacings (d) of the moulded bodies (12) are dimensioned such that, if a set towing speed is exceeded, each moulded body (12) arranged behind a moulded body (12) in the towing direction lies in the region of the no-flow area produced by the moulded body (12) lying in front.

2. End piece according to claim 1, **characterised by** that the spacings (d) of the moulded bodies (12) are dimensioned differently.

3. End piece according to claim 1 or 2, **characterised by** that the moulded bodies (12) are arranged rotatably around the cable (11).

4. End piece according to claim 1, **characterised by** that the sheath of the end disc (18) is rounded towards both disc surfaces.

5. End piece according to claim 1 or 4, **characterised by** that the outer diameter of the end disc (18) is equal to the outer diameter of the funnel (15) at the funnel opening (16).

6. End piece according to one of claims 1 or 4 - 5, **characterised by** that axial webs (20) offset in relation to one another are placed on the funnel sheath (17) in a circumferential direction, which webs extend from the funnel opening (16) as far as the end disc (18) and the outer web lines (201) of which running parallel to the funnel axis have a radial spacing from the funnel axis corresponding to the outer radius of the end disc (18).

7. End piece according to claim 6, **characterised by** that the rotation angle offset of the axial webs is 90°.

8. End piece according to one of claims 1 or 4 - 7, **characterised by** that a closing cone (14) with axial through openings (22) is placed on the funnel opening (16) and that a central through hole (23, 21) is provided respectively in the closing cone (14), in the funnel base and in the end disc (18), the hole diameter of which is greater than the outer diameter of the cable (11).

9. End piece according to claim 8, **characterised by** that an annular rim (19) with an inner diameter corresponding to the diameter of the funnel opening (16) is arranged in front of the funnel opening (16) and that at the end of the closing cone (14) on the funnel side an annular web (24) protrudes axially, which is insertable in a form-fit manner into the annular rim (19).

10. End piece according to claim 9, **characterised by** that the diameter of the base area of the closing cone (14) is dimensioned equal to the outer diameter of the annular rim (19).

11. End piece according to one of claims 1 - 10, **characterised by** that the end piece is configured in such a way that it can be used as an extraction aid for producing a tensile force acting on the removal end of the trailing antenna when releasing the trailing antenna, wherein the moulded bodies (12) are carried slidingly in a washing tube (25) with an inlet and outlet opening (251, 252) for the tube-shaped trailing antenna and a water pressure is built up in the washing tube (25) from the inlet opening (251) of the washing tube (25).

12. End piece according to claim 11, **characterised by** that the moulded bodies (12) consist of material that slides easily, preferably Teflon.

13. End piece according to claim 11 or 12, **characterised by** that the last moulded body (12) in the towing direction has a stop cooperating with the washing tube (25).

14. End piece according to claim 13, **characterised by** that the stop is formed by a locking element (26) preferably in the shape of a truncated cone, which is formed to close the outlet opening (252) of the washing tube (25).

15. End piece according to claim 13, **characterised by** that the locking element (26) is attached to the end disc (18) of the moulded body (12).

## Revendications

1. Embout pour antenne remorquée sous-marine pouvant être traînée pour générer une force de traction inverse à la direction de remorquage sur l'extrémité de l'antenne remorquée, comprenant une pluralité de corps moulés (12) agencés sur un câble (11) essentiellement immobiles axialement, espacés les uns des autres, qui sont conçus pour générer une traînée, **caractérisé en ce que** chaque corps moulé (12) présente un entonnoir (15) avec l'ouverture d'entonnoir (16) orientée dans la direction de remorquage, ainsi qu'un disque terminal (18) dépassant radialement de l'enveloppe d'entonnoir (17) agencé sur l'extrémité opposée à l'ouverture d'entonnoir (16) et **en ce que** les écarts (d) entre les corps moulés (12) sont dimensionnés de telle manière que lors du dépassement d'une vitesse de remorquage définie chaque corps moulé (12) en aval d'un corps moulé (12) dans la direction de remorquage se trouve dans la zone abritée du courant générée par le corps moulé (12) précédent.

2. Embout selon la revendication 1, **caractérisé en ce que** les écarts (d) entre les corps moulés (12) sont dimensionnés différemment.

3. Embout selon la revendication 1 ou 2, **caractérisé en ce que** les corps moulés (12) sont agencés rotatifs autour du câble (11).

4. Embout selon la revendication 1, **caractérisé en ce que** l'enveloppe du disque terminal (18) est arrondie vers les deux faces de disque.

5. Embout selon la revendication 1 ou 4, **caractérisé en ce que** le diamètre extérieur du disque terminal (18) est égal au diamètre extérieur de l'entonnoir (15) à l'ouverture d'entonnoir (16).

6. Embout selon l'une des revendications 1 ou 4 à 5, **caractérisé en ce que** sur l'enveloppe d'entonnoir (17) sont placées des entretoises axiales (20) décalées les unes par rapport aux autres dans la direction périphérique, lesquelles s'étendent de l'ouverture d'entonnoir (16) au disque terminal (18) et dont les lignes d'entretoise (201) extérieures s'étendant parallèlement à l'axe d'entonnoir présentent un écart radial de l'axe d'entonnoir correspondant au rayon extérieur du disque terminal (18).

7. Embout selon la revendication 6, **caractérisé en ce que** le décalage de l'angle de rotation des entretoises axiales est de 90°.

8. Embout selon l'une des revendications 1 ou 4 à 7, **caractérisé en ce qu**'un cône obturateur (14) présentant des ouvertures de passage (22) axiales est placé sur l'ouverture d'entonnoir (16) et en ce qu'un trou débouchant (23, 21) central est prévu respectivement dans le cône obturateur (14), dans le fond de l'entonnoir et dans le disque terminal (18), dont le diamètre de trou est supérieur au diamètre extérieur du câble (11).

9. Embout selon la revendication 8, **caractérisé en ce qu**'un bord annulaire (19) avec un diamètre intérieur correspondant au diamètre de l'ouverture d'entonnoir (16) est disposé devant l'ouverture d'entonnoir (16) et en ce que sur l'extrémité côté entonnoir du cône obturateur (14) une bride annulaire (24) dépasse axialement, laquelle peut être insérée par complémentarité de forme dans le bord annulaire (19).

10. Embout selon la revendication 9, **caractérisé en ce que** le diamètre de la surface de base du cône obturateur (14) est de dimension égale au diamètre extérieur du bord annulaire (19).

11. Embout selon l'une des revendications 1 à 10, **caractérisé en ce que** l'embout est réalisé de telle manière qu'il peut être utilisé comme aide à l'extraction pour générer une force de traction agissant sur l'extrémité de mouillage de l'antenne remorquée lors du largage de l'antenne remorquée, les corps moulés (12) étant guidés par glissement dans un tuyau de refoulement (25) avec une ouverture d'entrée et de sortie (251, 252) pour l'antenne remorquée en forme de tuyau et une pression de l'eau étant établie dans le tuyau de refoulement (25) par l'ouverture d'entrée (251) du tuyau de refoulement (25).

12. Embout selon la revendication 11, **caractérisé en ce que** les corps moulés (12) sont composés d'un matériau à bonne capacité de glissement, de préférence du téflon.

13. Embout selon la revendication 11 ou 12, **caractérisé en ce que** le dernier corps moulé (12) dans la direction de remorquage présente une butée coopérant avec le tuyau de refoulement (25).

14. Embout selon la revendication 13, **caractérisé en ce que** la butée est formée par un organe de fermeture (26) de préférence tronconique, qui est conçu pour la fermeture de l'ouverture de sortie (252) du tuyau de refoulement (25).

15. Embout selon la revendication 13, **caractérisé en ce que** l'organe de fermeture (26) est fixé au disque terminal (18) du corps moulé (12).
